# EUROPEAN PATENT APPLICATION

(11) **EP 4 808 049 A1**
(43) Date of publication of application: **16.09.2026**
(21) Application number: 26163267.3
(22) Date of filing: 09.03.2026
(51) Int. Cl.: H04L 12/12, H04L 12/40, H04L 41/0659

(54) **METHOD OF SUPPORTING CAN COMMUNICATION AND ELECTRONIC DEVICE SUPPORTING THE SAME**

(30) Priority: 10.03.2025 KR 20250030524
(71) Applicant: LG Innotek Co., Ltd., Seoul 07796 (KR)
(72) Inventor: YOON, Dong Kwan, 07796 Seoul (KR); YOON, Dong Keun, 07796 Seoul (KR)
(74) Representative: Plasseraud IP

(57) **Abstract**

According to an embodiment of the present invention, there is provided an electronic device including a controller, a controller area network (CAN) communication unit connected to the controller, and a switching unit that is disposed between the CAN communication unit and a CAN bus and switches CAN Low and CAN High of the CAN bus connected to the CAN communication unit based on a control signal, in which the control signal is generated by the controller.

## Description

### CROSS-REFERENCE TO RELATED APPLICATION

This application claims priority to and the benefit of Korean Patent Application No. 2025-0030524, filed on March 10, 2025, the disclosure of which is incorporated herein by reference in its entirety.

### BACKGROUND

### 1. Field of the Invention

The present invention relates to a method of supporting controller area network (CAN) communication and an electronic device supporting the same, and more specifically, to a method and device capable of detecting wiring errors on CAN communication lines and resolving miswiring.

### 2. Discussion of Related Art

CAN communication is multi-master, message-based communication in which multiple electronic devices transmit and receive data in the form of messages over a network. Each message contains data along with an identifier, and all electronic devices share a bus, which is a communication line, to transmit and receive messages. In CAN communication, a message can be transmitted by only one electronic device on the bus at a time, and each electronic device can transmit the message whenever the bus is idle.

In CAN communication, data is transmitted and received using two lines of CAN High and CAN Low. Data is represented using a voltage difference between the two lines. A value of (CAN High-CAN Low) between 0.9 and 5 V indicates logical 0, while a value of (CAN High-CAN Low) between -0.1 and 0.5 V indicates logical 1.

In CAN communication, a transmission priority is determined based on the message identifier. The smaller the identifier value, the higher the priority. CAN communication has built-in error detection and correction functions, enabling reliable communication. Furthermore, CAN communication has the advantage of being able to transmit data at a high speed and in real time.

However, in CAN communication, when CAN High and CAN Low are incorrectly connected, normal data transmission and reception may not be possible. Therefore, a method of detecting and resolving such errors is necessary.

### SUMMARY OF THE INVENTION

The present invention is directed to providing a method and configuration capable of detecting a case in which CAN High and CAN Low are incorrectly connected in CAN communication and resolving the problem.

The present invention is also directed to providing a method of determining whether the cause is a wiring error when CAN communication is not possible in an electronic device for supporting CAN communication and resolving the wiring error.

In addition, the technical problems to be solved by the present invention are not limited to the technical problems described above, and other technical problems may also exist.

According to an aspect of the present invention, there is provided an electronic device including a controller, a controller area network (CAN) communication unit connected to the controller, and a switching unit that is disposed between the CAN communication unit and a CAN bus and switches CAN Low and CAN High of the CAN bus connected to the CAN communication unit based on a control signal, in which the control signal is generated by the controller.

In the electronic device, the switching unit may include a plurality of single pole double throw (SPDT) switches, a pole of one of the plurality of SPDT switches may be connected to a first terminal among terminals of the CAN communication unit and two throws of the SPDT switch may each be connected to a corresponding one of CAN Low and CAN High of the CAN bus, and a pole of another one of the plurality of SPDT switches may be connected to a second terminal among the terminals of the CAN communication unit, and two throws of the SPDT switch may each be connected to a corresponding one of CAN Low and CAN High of the CAN bus.

In the electronic device, the switching unit may include a plurality of SPDT switches, a pole of one of the plurality of SPDT switches may be connected to CAN Low of the CAN bus and two throws of the SPDT switch may each be connected to a corresponding one of a first terminal and a second terminal among terminals of the CAN communication unit, and a pole of another one of the plurality of SPDT switches may be connected to CAN High of the CAN bus and two throws of the SPDT switch may each be connected to a corresponding one of the first terminal and the second terminal among the terminals of the CAN communication unit.

The electronic device may further include a switching control unit, and the switching control unit may be configured to receive the control signal generated by the controller and transmit the control signal to the switching unit.

In the electronic device, the controller may set a variable indicating whether switching is performed to check whether CAN communication is operating, wait for a predetermined period of time, set CAN communication-related variables, transmit data requesting data reception, and determine whether CAN communication is operating normally by checking whether data is received within a specified time.

In the electronic device, the controller may check the variable indicating whether the switching is performed when data is not received within the specified time, transmit a signal for controlling the switching unit when it is checked that the variable indicating whether the switching is performed indicates that switching has not occurred, reset the variable indicating whether the switching is performed, wait for the predetermined period of time, set the CAN communication-related variables, transmit the data requesting data reception, and determine whether CAN communication is operating normally by checking whether data is received within the specified time.

In the electronic device, the controller may check the variable indicating whether the switching is performed when data is not received within the specified time and determine that there is a problem other than a wiring error in CAN communication when it is checked that the variable indicating whether the switching is performed indicates that switching has occurred.

According to another aspect of the present invention, there is provided a method of supporting CAN communication by an electronic device, the method including setting a variable indicating whether switching is performed to check whether CAN communication is operating, waiting for a predetermined period of time, setting CAN communication-related variables, transmitting data requesting data reception, determining whether data is received within a specified time, and determining that CAN communication is operating normally when data is received within the specified time.

In the method of supporting CAN communication by the electronic device, the predetermined period of time may be a time required for a signal to stabilize according to switching of a switching unit that is included in the electronic device and switches CAN Low and CAN High.

The method of supporting CAN communication by the electronic device may further include checking the variable indicating whether the switching is performed when data is not received within the specified time and transmitting a control signal for switching CAN Low and CAN High of the switching unit when it is checked that the variable indicating whether the switching is performed indicates that switching has not occurred.

The method of supporting CAN communication by the electronic device may further include resetting the variable indicating whether switching is performed to check whether the CAN communication is operating, waiting for the predetermined period of time, setting the CAN communication-related variables, transmitting the data requesting data reception, checking whether data is received within the specified time, and determining that CAN communication is operating normally when data is received within the specified time.

The method of supporting CAN communication by the electronic device may further include determining that there is an error other than a wiring error in CAN communication when data is not received within the specified time.

The method of supporting CAN communication by the electronic device may further include checking the variable indicating whether the switching is performed when data is not received within the specified and determining that there is a problem other than a wiring error in CAN communication when it is checked that the variable indicating whether the switching is performed indicates that switching has occurred.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a diagram illustrating an example in which a wiring error occurs in a circuit in an electronic device for supporting CAN communication;
FIG. 2 is a block diagram of an electronic device capable of detecting a wiring error in CAN communication and resolving the wiring error according to an embodiment of the present invention;
FIGS. 3A and 3B are diagrams illustrating examples of a switching unit of an electronic device according to an embodiment of the present invention; and
FIG. 4 is a flowchart of a method of supporting CAN communication by an electronic device according to an embodiment of the present invention.

### DETAILED DESCRIPTION OF EXEMPLARY EMBODIMENTS

Hereinafter, exemplary embodiments of the present invention will be described in detail with reference to the accompanying diagrams.

However, the technical idea of the present invention is not limited to the several embodiments described, but can be implemented in various different forms, and within the scope of the technical idea of the present invention, one or more components between embodiments may be selectively combined or substituted and used.

In addition, terms (including technical and scientific terms) used in the embodiments of the present invention, unless explicitly and specifically defined and described, may be interpreted as having meanings that may be generally understood by a person of ordinary skill in the technical field to which the present invention belongs, and the meanings of commonly used terms, such as terms defined in a dictionary, may be interpreted in consideration of the contextual meaning of the related technology.

In addition, terms used in embodiments of the present invention are for the purpose of describing the embodiments and are not intended to limit the present invention.

In this specification, singular forms may also include plural forms unless specifically stated in the phrase, and the phrase "at least one (or one or more) of A, B and C," may include one or more of all possible combinations of A, B, and C.

In addition, terms such as "first," "second," "A," "B," "(a)," "(b)," etc., may be used to describe the components of the embodiments of the present invention.

These terms are only intended to distinguish the components from other components, and do not limit the nature, order, or sequence of the components.

In addition, when a component is said to be "connected," "joined" or "coupled" to another component, this may include not only the case where the component is directly connected, joined, or coupled to the other component, but also the case where the components are connected, joined, or coupled with another component present therebetween.

In addition, when a component is said to be formed or disposed "above (on)" or "below (under)" another component, this includes not only the case where the two components are in direct contact with each other, but also the case where one or more other components are formed or disposed between the two components. When expressed as "above (on)" or "below (under)," it may include the meaning of not only the upward direction but also the downward direction based on one component.

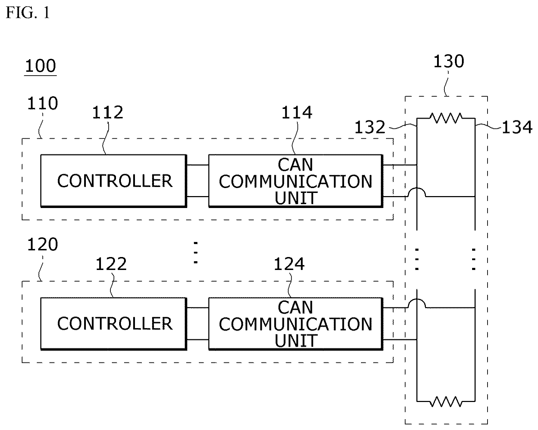

FIG. 1 is a diagram illustrating an example in which a wiring error occurs in a circuit in an electronic device that supports controller area network (CAN) communication.

Referring to FIG. 1, an electronic device 100 supporting CAN communication may include a plurality of modules that perform CAN communication. In FIG. 1, a first module 110 and a second module 120 are shown in detail as examples of a plurality of modules that perform CAN communication. The first module 110 and the second module 120 may include controllers 112 and 122 and CAN communication units 114 and 124, respectively. The CAN communication units 114 and 124 included in the first and second modules may be connected to a CAN bus 130 to transmit and receive data.

According to an embodiment, the electronic device 100 may be a vehicle, and an electronic control unit (ECU), a transmission control unit (TCU), an advanced driver assistance system (ADAS), etc., included in the vehicle may be modules that perform CAN communication. The ECU, TCU, ADAS, etc., may be connected to the CAN bus and may transmit and receive necessary data.

Referring again to FIG. 1, the controllers 112 and 122 included in the first module 110 and the second module 120 may be connected to the CAN communication units 114 and 124. The controllers 112 and 122 may generate data and transmit the data to the CAN communication units 114 and 124 connected to the controllers 112 and 122. In addition, the controllers 112 and 122 may receive data from the CAN communication units 114 and 124 and process the received data.

The CAN communication units 114 and 124 may configure data received from the controllers 112 and 122 to conform to the CAN protocol format. For example, the CAN communication units 114 and 124 may configure a frame by adding an identifier and control information to data received from the controllers 112 and 122. The control information may include a code indicating the start of a message, a code indicating the end of a message, an error detection code, information indicating the length of the message, etc., and at least some of these may be included in the frame and transmitted. The CAN communication units 114 and 124 may transmit the generated data to the CAN bus 130.

The CAN communication units 114 and 124 may receive data transmitted through the CAN bus 130. The CAN communication units 114 and 124 may check whether the received data is data transmitted to be destined for the controllers 112 and 122 connected to the CAN communication units 114 and 124. The CAN communication units 114 and 124 may transmit data with identifier and control information removed to the controllers 112 and 122 when the received data is data transmitted to be destined for the controllers 112 and 122 connected to the CAN communication units 114 and 124.

The CAN bus 130 is a communication cable that supports CAN communication, which may include two lines of CAN High 132 and CAN Low 134. The CAN communication units 114 and 124 includes terminals to be connected to CAN High 132 and CAN Low 134 of the CAN bus 130. The CAN communication units 114 and 124 may transmit data using a voltage difference between CAN High 132 and CAN Low 134. For example, the CAN communication units 114 and 124 may set a value of (CAN High 132-CAN Low 134) to be 0.9 to 5 V to transmit logical 0 and may set the value of (CAN High 132-CAN Low 134) to be -0.1 to 0.5 V to transmit logical 1. However, when the wiring lines connected to CAN High 132 and CAN Low 134 are reversed as in the second module 120, even when the controller 122 transmits data, other modules may not receive the data or the controller 122 may not properly receive data transmitted by other modules. Such a reversal of wiring may occur due to human error, and the error may not be recognized, which prevents the cause of the problem from being determined.

Hereinafter, a method of detecting a wiring error in CAN communication and resolving the wiring error, and an electronic device implementing the method will be described.

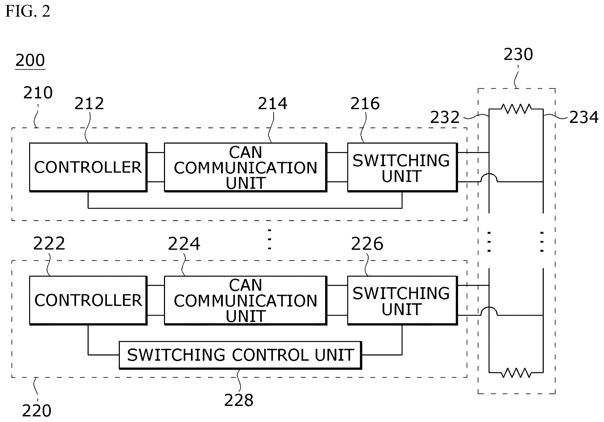

FIG. 2 is a block diagram of an electronic device capable of detecting a wiring error in CAN communication and resolving the wiring error according to an embodiment of the present invention.

As in FIG. 1, an electronic device 200 for supporting CAN communication may include a plurality of modules that perform CAN communication. When there are a plurality of modules performing CAN communication, one of the plurality of modules may become a master and the others may become slaves. The CAN High and CAN Low of the CAN bus may be determined by the master, and the slaves may transmit and receive signals based on the CAN High and CAN Low determined by the master. Alternatively, the user may pre-determine and connect the CAN High and CAN Low of the CAN bus during a design phase without a master or slaves. Alternatively, when the module performing CAN communication may switch both CAN High and CAN Low of the CAN bus, it may not be necessary to distinguish between the master and slaves.

Referring to FIG. 2, the electronic device 200, which supports CAN communication, includes a first module 210 and a second module 220 among a plurality of modules that perform CAN communication. In FIG. 2, the first module 210 and the second module 220 may switch both CAN High and CAN Low of the CAN bus. Therefore, both the first module 210 and the second module 220 may become a master or slave or may not need to be set as a master or slave in advance.

In FIG. 2, the first module 210 may include a controller 212, a CAN communication unit 214, and a switching unit 216, and the second module 220 may include a controller 222, a CAN communication unit 224, a switching unit 226, and a switching control unit 228. In FIG. 2, the second module 220 is illustrated as including the switching control unit 228 in addition to the first module 210, but the first module 210 may be configured like the second module 220 or the second module 220 may be configured like the first module 210. Alternatively, both the first module 210 and the second module 220 may be configured identically to the first module 210 or the second module 220.

The controllers 212 and 222 included in the first module 210 and the second module 220 may be connected to the CAN communication units 214 and 224 as described with reference to FIG. 1. The controllers 212 and 222 may generate data to be transmitted via CAN communication and transmit the data to the CAN communication units 214 and 224 connected to the controllers 212 and 222. The controllers 212 and 222 may receive data from the CAN communication units 214 and 224 and process the received data.

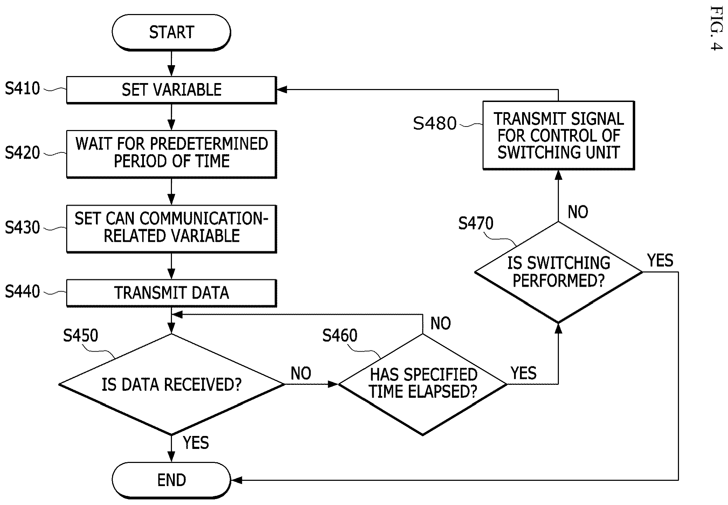

According to an embodiment, the controllers 212 and 222 may determine whether the wiring of the CAN communication units 214 and 224 and a CAN bus 230 is normal. The method of determining whether the wiring of the CAN communication units 214 and 224 and the CAN bus 230 is normal by the controllers 212 and 222 will be described in detail with reference to FIG. 4. When it is determined that the wiring of the CAN communication units 214 and 224 and the CAN bus 230 is incorrect, the controllers 212 and 222 may generate a signal to control the switching units 216 and 226. In the first module 210, the controller 212 may directly transmit a generated signal to the switching unit 216, and in the second module 220, the controller 222 may transmit a generated signal to the switching unit 216 through the switching control unit 228.

The CAN communication units 214 and 224 may configure data received from the controllers 212 and 222 to conform to the CAN protocol format. For example, the CAN communication units 214 and 224 may configure a frame by adding an identifier and control information to the data received from the controllers 212 and 222. The control information may include a code indicating the start of a message, a code indicating the end of a message, an error detection code, information indicating the length of the message, etc., and at least some of these may be included in the frame and transmitted. The CAN communication units 214 and 224 may transmit the generated data to the CAN bus 230.

The CAN communication units 214 and 224 may receive data transmitted through the CAN bus 230. The CAN communication units 214 and 224 may check whether the received data is data transmitted to be destined for the controllers 212 and 222. The CAN communication units 214 and 224 may transmit the received data to the controllers 212 and 222 when the received data is data transmitted to be destined for the controllers 212 and 222 connected to the CAN communication units 214 and 224.

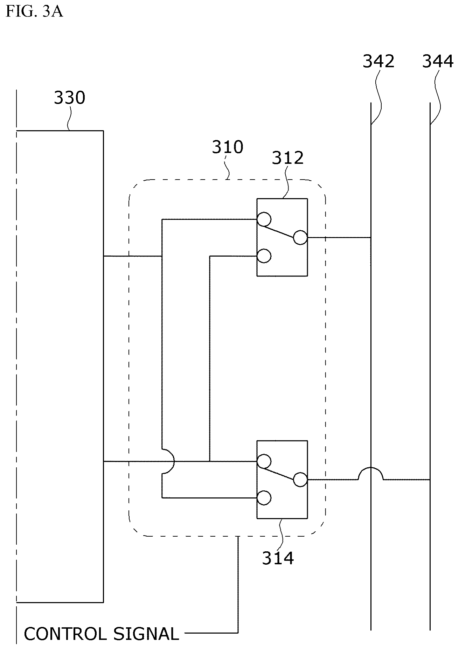

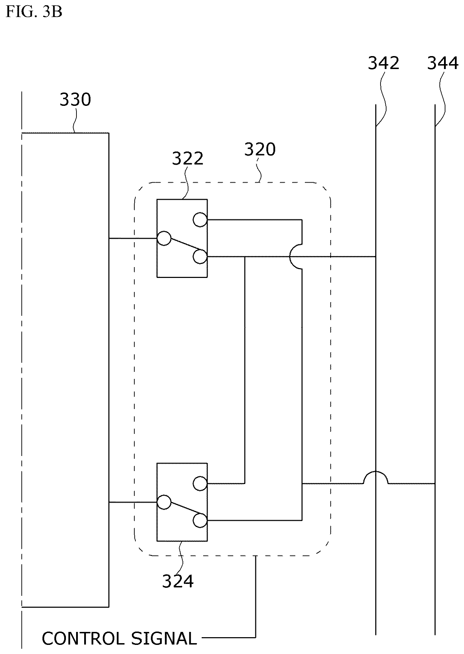

The switching units 216 and 226 may be further included between the CAN communication units 214 and 224 and the CAN bus 230. The switching units 216 and 226 may be configured to correct an incorrect connection between the CAN communication units 214 and 224 and the CAN bus 230. The switching units 216 and 226 may switch the connection between the CAN communication units 214 and 224 and the CAN bus 230. The switching units 216 and 226 may receive a control signal directly from the controller 212 as in the first module 210 or may receive a control signal through the switching control unit 228 as in the second module 220. The detailed configuration of the switching units 216 and 226 may be as shown in FIG. 3A or 3B. In an embodiment, the switching units 216 and 226 may be replaced with a circuit switching chip (IC).

The switching control unit 228 may transmit the control signal to the switching unit 226. The switching control unit 228 may control the switching unit 226 with a signal generated based on whether the wiring of the CAN communication unit 224 and the CAN bus 230 determined by the controller 222 is normal. For example, the switching control unit 228 may be provided as a general-purpose input/output (GPIO). When the switching unit 226 is of an insulated type, the switching control unit 228 may also be configured as an insulated type. When the switching unit 226 is a non-insulated type, the switching control unit 228 may be configured as a buffer. As another example, the switching control unit 228 may be configured to simply bypass the signal.

FIGS. 3A and 3B are diagrams illustrating examples of a switching unit of an electronic device according to an embodiment of the present invention.

The switching unit of the electronic device described with reference to FIGS. 3A and 3B may be the switching unit 216 of the first module 210 and/or the switching unit 226 of the second module 220 of FIG. 2. Referring to FIGS. 3A and 3B, switching units 310 and 320 may include a plurality of switches. The plurality of switches may be, for example, single pole double throw (SPDT) switches.

Referring to FIG. 3A, the switching unit 310 may include a first switch 312 and a second switch 314. Both the first switch 312 and the second switch 314 may be SPDT switches. Specifically, a pole of the first switch 312 may be connected to CAN High 342 of the CAN bus. Two throws of the first switch 312 may each be connected to a corresponding one of a first terminal and a second terminal among terminals of the CAN communication unit 330. A pole of the second switch 314 may be connected to CAN Low 344 of the CAN bus, and wo throws of the second switch 314 may each be connected to a corresponding one of the first terminal and the second terminal among the terminals of the CAN communication unit 330. The first terminal and the second terminal, which are terminals of the CAN communication unit 330, may be terminals for CAN communication.

The switching unit 310 may be connected to a controller or switching control unit to receive a control signal. The first switch 312 and the second switch 314 included in the switching unit 310 may be switched according to the control signal. For example, based on the control signal, a throw of the first switch 312 may be connected to the first terminal of the CAN communication unit 330 and a throw of the second switch 314 may be connected to the second terminal of the CAN communication unit 330, or the throw of the first switch 312 may be connected to the second terminal of the CAN communication unit 330 and the throw of the second switch 314 may be connected to the first terminal of the CAN communication unit 330.

Referring to FIG. 3B, the switching unit 320 may include a first switch 322 and a second switch 324. Both the first switch 322 and the second switch 324 may be SPDT switches. Specifically, a pole of the first switch 322 may be connected to a first terminal among terminals of the CAN communication unit 330. Two throws of the first switch 322 may be each connected to a corresponding one of CAN High 342 and CAN Low 344 of the CAN bus. A pole of the second switch 324 may be connected to a second terminal among the terminals of the CAN communication unit 330, and two throws of the second switch 324 may each be connected to a corresponding one of CAN High 342 and CAN Low 344 of the CAN bus. The first terminal and the second terminal, which are terminals of the CAN communication unit 330, may be terminals for CAN communication.

The switching unit 320 may be connected to a controller or switching control unit to receive a control signal. The first switch 322 and the second switch 324 included in the switching unit 320 may be switched according to the control signal. For example, based on the control signal, a throw of the first switch 322 may be connected to CAN High 342 of the CAN bus and a throw of the second switch 314 may be connected to CAN Low 344 of the CAN bus, or the throw of the first switch 312 may be connected to CAN Low 344 of the CAN bus and the throw of the second switch 314 may be connected to CAN High 342 of the CAN bus.

In FIGS. 3A and 3B, the SPDT switch is described as an example, but the switching unit may be configured with a plurality of single pole single throw (SPST) switches. For example, one SPDT switch may be configured with two SPST switches.

FIG. 4 is a flowchart of a method of supporting CAN communication by an electronic device according to an embodiment of the present invention.

An electronic device according to an embodiment of the present invention can determine whether a wiring error has occurred on a CAN communication line, and when a wiring error is detected, the electronic device can switch the wiring to support CAN communication. In addition, when the electronic device cannot perform CAN communication despite switching the wiring, the electronic device may determine that an error has occurred in another configuration.

Specifically, a controller included in an electronic device and supporting CAN communication may set variables necessary to check whether CAN communication is operating (S410). For example, variables required to determine whether CAN communication is operating may include a variable indicating whether switching of the switching unit is performed. When the controller sets a variable for the first time, the controller may set the variable as if no switching has occurred (e.g., variable = N), and subsequently, when the controller receives no data and transmits a control signal for switching, the controller may set the variable as if switching has occurred (e.g., variable = Y). When no data is received even though the variable indicates that switching has occurred, the controller may determine that a problem with something other than CAN communication has occurred.

The controller may wait for a predetermined period of time (S420). The predetermined period of time may be the time required for a signal to stabilize by switching CAN low and CAN high according to the switching of the switching unit. That is, when switching the switch, noise may be generated due to a sudden change in current, and it may take a predetermined period of time for this noise to be removed. For example, the predetermined period of time may range from several microseconds to several seconds, which may vary depending on the configuration and/or performance of the switching unit.

The controller may set CAN communication-related variables (S430). The CAN communication-related variables may be set in a register, and as the variable, mode settings (e.g., initial settings, low power, test, and normal), transmit and receive filters (e.g., identifier filters), interrupt settings (e.g., event occurrence interrupt settings), bus timeout (e.g., error handling when not received), speed settings (e.g., communication speed), transmission message storage, reception message storage, a state, an error count, etc., may be set.

The controller may transmit data requesting reception of data (S440). For example, the controller may transmit a message requesting data to another module that supports CAN communication included in the electronic device.

The controller may check whether data is received within a specified time (S450). The specified time may be a preset time or may be changed. The specified time may vary depending on the speed supported by CAN communication. In addition, the set time may also vary depending on the number of CAN communication modules that perform CAN communication connected to the CAN bus. For example, the controller may check whether a message is received within a time set as a bus timeout, and the time set as the bus timeout may vary depending on the communication speed stored in the speed setting. When data is received, an interrupt occurs and thus the controller may check whether data has been received. The controller may determine that CAN communication is operating normally when data is received within a specified time.

The controller may check whether the specified time has elapsed when no data is received (S460).

The controller may check whether switching is performed when the specified time has elapsed without receiving data (S470). The controller may check whether switching is performed based on the set variable. When the controller does not receive data within the specified time even though the variable is set to indicate that switching has occurred, the controller may determine that there is a problem with something other than wiring.

However, when it is determined that switching is not performed, a control signal may be transmitted to switch CAN low and CAN high of the switching unit (S480). Subsequently, the controller may reset the variable required to check whether CAN communication is operating (S410). As described above, the variable indicating whether switching is performed may be reset (e.g., variable = Y).

The controller may then perform steps S420 to S470 again.

The controller may determine that CAN communication is operating normally when data is received within the specified time. However, when data is not received within the specified time, the controller may determine that a problem with something other than CAN communication has occurred.

According to an embodiment, the controller may perform the preceding steps again before determining that the problem with something other than CAN communication has occurred, and when no data is received, the controller may determine that the problem with something other than CAN communication has occurred. The controller may transmit a relevant message to another device or to the user.

According to an embodiment of the present invention, even when the wiring lines of CAN Low and CAN High connected to a CAN communication unit in an electronic device for supporting CAN communication are reversed, a user can modify the wiring using software without directly modifying the hardware.

According to an embodiment of the present invention, an electronic device for supporting CAN communication can check whether there is a wiring error in a CAN bus using software.

In addition, the effects that can be obtained from the present invention are not limited to the effects mentioned above, and other effects that have not been mentioned can be clearly understood by a person having ordinary skill in the technical field to which the present invention belongs from the description below.

Although the above description has focused on embodiments, these are merely examples and do not limit the scope of the invention. Those skilled in the art to which the present invention pertains will recognize that various modifications and applications not illustrated above are possible without departing from the essential character of the present embodiments. For example, each component specifically shown in the embodiments may be modified and implemented. Furthermore, the differences related to such modifications and applications should be construed as falling within the scope of the present invention as defined in the appended claims.

## Claims

1. An electronic device comprising:
a controller;
a controller area network (CAN) communication unit connected to the controller; and
a switching unit that is disposed between the CAN communication unit and a CAN bus and switches CAN Low and CAN High of the CAN bus connected to the CAN communication unit based on a control signal,
wherein the control signal is generated by the controller.

2. The electronic device of claim 1, wherein the switching unit includes a plurality of single pole double throw (SPDT) switches,
a pole of one of the plurality of SPDT switches is connected to a first terminal among terminals of the CAN communication unit and two throws of the SPDT switch are each connected to a corresponding one of CAN Low and CAN High of the CAN bus, and
a pole of another one of the plurality of SPDT switches is connected to a second terminal among the terminals of the CAN communication unit, and two throws of the SPDT switch are each connected to a corresponding one of CAN Low and CAN High of the CAN bus.

3. The electronic device of claim 1, wherein the switching unit includes a plurality of SPDT switches,
a pole of one of the plurality of SPDT switches is connected to CAN Low of the CAN bus and two throws of the SPDT switch are each connected to a corresponding one of a first terminal and a second terminal among terminals of the CAN communication unit, and
a pole of another one of the plurality of SPDT switches is connected to CAN High of the CAN bus and two throws of the SPDT switch are each connected to a corresponding one of the first terminal and the second terminal among the terminals of the CAN communication unit.

4. The electronic device of any one of claims 1 to 3, further comprising a switching control unit,
wherein the switching control unit receives the control signal generated by the controller and transmits the control signal to the switching unit.

5. The electronic device of any one of claims 1 to 4, wherein the controller sets a variable indicating whether switching is performed to check whether CAN communication is operating, waits for a predetermined period of time, sets CAN communication-related variables, transmits data requesting data reception, and determines whether CAN communication is operating normally by checking whether data is received within a specified time.

6. The electronic device of claim 5, wherein the controller is configured to:
check the variable indicating whether the switching is performed when data is not received within the specified time;
transmit a signal for controlling the switching unit when it is checked that the variable indicating whether the switching is performed indicates that switching has not occurred;
reset the variable indicating whether the switching is performed;
wait for the predetermined period of time;
set the CAN communication-related variables;
transmit the data requesting data reception; and
determine whether CAN communication is operating normally by checking whether data is received within the specified time.

7. The electronic device of claim 5 or claim 6, wherein the controller checks the variable indicating whether the switching is performed when data is not received within the specified time and determines that there is a problem other than a wiring error in CAN communication when it is checked that the variable indicating whether the switching is performed indicates that switching has occurred.

8. The electronic device of claim 7, wherein the controller transmits a related message to another device or to a user when it is determined that there is the problem other than the wiring error in CAN communication.

9. The electronic device of any one of claims 5 to 8, wherein the CAN communication-related variables are one or more of a mode setting, a transmit and receive filter, an interrupt setting, a bus timeout, a speed setting, transmission message storage, reception message storage, a state, and an error count.

10. The electronic device of any one of claims 5 to 9, wherein the specified time is determined based on one or more of the number of CAN communication modules that perform CAN communication connected to the CAN bus and a speed supported by the CAN communication.

11. A method of supporting controller area network (CAN) communication by an electronic device, comprising:
setting a variable indicating whether switching is performed to check whether CAN communication is operating;
waiting for a predetermined period of time;
setting CAN communication-related variables;
transmitting data requesting data reception;
determining whether data is received within a specified time; and
determining that CAN communication is operating normally when data is received within the specified time.

12. The method of claim 11, wherein the predetermined period of time is a time required for a signal to stabilize according to switching of a switching unit that is included in the electronic device and switches CAN Low and CAN High.

13. The method of claim 11 or claim 12, further comprising:
checking the variable indicating whether the switching is performed when data is not received within the specified time; and
transmitting a control signal for switching CAN Low and CAN High of the switching unit when it is checked that the variable indicating whether the switching is performed indicates that switching has not occurred.

14. The method of any one of claims 11 to 13, further comprising:
resetting the variable indicating whether switching is performed to check whether the CAN communication is operating;
waiting for the predetermined period of time;
setting the CAN communication-related variables;
transmitting the data requesting data reception;
checking whether data is received within the specified time; and
determining that CAN communication is operating normally when data is received within the specified time.

15. The method of claim 14, further comprising determining that there is an error other than a wiring error in CAN communication when data is not received within the specified time.
